(19) Europäisches Patentamt
European Patent Office
Office européen des brevets

(11) Publication number: **0 162 313 B1**

# (12) EUROPEAN PATENT SPECIFICATION

(45) Date of publication of patent specification: **07.08.91**

(51) Int. Cl.5: **D06M 15/00**, D02G 3/48, B32B 25/02, D01F 6/62, C08J 5/06

(21) Application number: **85104912.2**

(22) Date of filing: **23.04.85**

The file contains technical information submitted after the application was filed and not included in this specification

## (54) Process for the production of rubberreinforcing polyester cord.

(30) Priority: **23.04.84 JP 82682/84**
**19.12.84 JP 269145/84**

(43) Date of publication of application:
**27.11.85 Bulletin 85/48**

(45) Publication of the grant of the patent:
**07.08.91 Bulletin 91/32**

(84) Designated Contracting States:
**DE FR GB LU**

(56) References cited:
**AT-B- 213 366**
**GB-A- 1 036 951**
**GB-A- 1 181 482**
**US-A- 4 195 052**
**DE-A- 2 516 541**
**GB-A- 1 085 410**
**GB-A- 1 329 922**

(73) Proprietor: **Toyo Boseki Kabushiki Kaisha**
**No.2-8, Dojimahama 2-chome Kita-ku**
**Osaka-shi Osaka-fu(JP)**

(72) Inventor: **Yabuki, Kazuyuki**
**No. 1-C-201, Katata 2-chome**
**Otsu-shi Shiga-gen(JP)**
Inventor: **Sawada, Shuzo**
**No. 4-28-101, Toyo-cho**
**Tsuruga-shi Fukui-ken(JP)**
Inventor: **Matsumoto, Ryuhei**
**No. 0-3-406, Toyo-cho**
**Tsuruga-shi Fukui-ken(JP)**
Inventor: **Yamamoto, Teruo**
**No. 93-5, Maruyama**
**Tsuruga-shi Fukui-ken(JP)**
Inventor: **Kohmura, Yohji**
**No. 63-7-2, Kanayama**
**Tsuruga-shi Fukui-ken(JP)**

(74) Representative: **von Kreisler, Alek, Dipl.-Chem. et al**
**Deichmannhaus am Hauptbahnhof**
**W-5000 Köln 1(DE)**

**EP 0 162 313 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The present invention relates to a process for the production of a rubber-reinforcing polyester cord. More particularly, it relates to a process for the production of a rubber-reinforcing polyester cord having excellent chemical stability which is useful as a reinforcing material for tires and belts, particularly as a carcass material for light truck tire.

It is known that polyester high tenacity yarns are an organic fiber having well balanced properties and are useful as an industrial material for various utilities, particularly polyethylene terephthalate tire cord is useful, for instance, as a carcass material for automobile tires.

However, the conventional polyethylene terephthalate cord is inferior in the chemical stability at high temperature, and hence, it is considered to be not suitable as a reinforcing material for some utilities which require high chemical stability when it is contained in rubber at high temperature, for instance, as a reinforcing material for truck tire, bus tire or bias light truck tire which has a large size, though it is advantageous in a lower cost than other materials and also in the excellent initial modulus and tenacity. In this viewpoint, nylon cord has mainly been used for bias tires such as light truck tires.

From US-A-4,195,052 it is known to spin PET filaments having an intrinsic viscosity of not less than 0.7, wherein the solidifying filament has a birefringence of 0.01 to 0.05, and to draw the solidified filaments at a ratio of 2.0 to 4.0. In the procedure for producing the reinforcing polyester tire cord the product is subjected to heat-treatment (i.e. dipping) and it is described that the dipping should be done at high temperature such as higher than 220 °C because the filaments should have a low shrinkage for the purpose for use for reinforcing tire cord, and if the conventional polyester spun and drawn yarn is subjected to the dipping at low temperature, the filaments have undesirably high shrinkage.

With recent development of motorization, users request more severe conditions for tires, and hence, the conventional tires are not satisfactory for such severe requirements. For instance, in case of bias light truck tire, improved steering stability, less noise and improved flat spotting properties are required. For satisfying these requirements, it is effective to improve the modulus of the tire cord material, and it is desired to use a polyester cord instead of a nylon cord. In order to use the polyester cord, it is essential to improve the chemical stability at high temperature when contained in rubber. That is, in case of bias tire having a size larger than that of light truck tire, the inner temperature of the tire occasionally increases to 140°C or higher during running to by its own heat build-up. In such a case, the conventional polyester tire cord rapidly loses its tenacity of fiber because of depolymerization reaction of the cord by an amine or moisture which are contained in the rubber. Thus, it is essential to eliminate these drawbacks in order to use the polyester cord for tires of large automobiles.

It has been well known that the chemical stability of the tire cord in rubber is an important problem for polyester fibers. It was proposed to improve the chemical stability by decreasing the carboxyl end groups in the polyester fibers to less than 15 equivalents/$10^6$ g by W. W. Daniels et al. (cf. U.S. Patent No. 3,051,212). There have been given various proposals for decreasing of the carboxyl end groups of polyester fibers (cf. U.S. Patent 3,975,329, and Japanese Patent First Publication No. 116816/1980). However, the chemical stability of polyester fibers within tires is not necessarily sufficiently improved by the mere decrease of carboxyl end groups. It will be clear from the fact that polyester fibers have never been used for light truck bias tires having a comparatively large size. This insufficient improvement of chemical stability in rubber by lowering of the carboxyl end group is also clear in view or the mechanism of degradation of polyester. That is, the degradation of polyester within rubber proceeds by hydrolysis and the carboxyl end group functions merely as an acidic catalyst, and on the other hand, rubber includes various amines as a vulcanization accelerator or an antioxidant and the amine additives are diffused within the polyester and act as a basic catalyst for the hydrolysis or polyester. It is well known that a basic catalyst shows a higher activity than an acidic catalyst in the hydrolysis of polyester. Accordingly, it is well understood that it is not so effective to decrease the amount of carboxyl end groups for the purpose of improving the chemical stability of polyester fiber within rubber from the above reaction mechanism.

It has also been tried to prevent the undesirable deterioration of polyester at high temperature by depressing the reaction with amines or moisture within rubber by means of incorporating an amine scavenger as isocyanate compounds or a hygroscopic agent such as calcium oxide to the surface of the polyester fibers or within the rubber to be reinforced around the periphery of fibers. However, these means are not only ineffective for substantial improvement of the chemical stability of the polyester per se but also disadvantageous in deterioration of other properties of polyester fibers and also in bad effect to processing of rubber. Accordingly, such means have never been used industrially.

Thus, there has hitherto been studied on improvement of chemical stability of polyester fibers in rubber, but any good method has never been found until now. Demand for polyester fibers having improved

chemical stability in rubber is more increased as mentioned above.

Under the circumstances, the present inventors have intensively studied on the improvement of chemical stability of polyester fibers in rubber and have found the following facts.

The deterioration of polyester in rubber is caused by hydrolysis due to the presence of an amine catalyst, wherein the amine catalyst is amines derived from the additives such as vulcanization accelerators and antioxidants contained in the rubber which are diffused within the polyester fibers. Since amines have high polarity and are not easily diffused within the non-polar polyester fibers in comparison with water molecule, the diffusion of amines into polyester can sufficiently be prevented by increasing in some extent the restraint of molecular chain in amorphous region of polyester and thereby lowering the mobility of molecular chain, and as the result, the undesirable deterioration of polyester in rubber can significantly be inhibited.

Based on the above finding of deterioration mechanisms of polyester fibers, the present inventors have further studied on the molecular mobility of polyester fibers and on various conditons for the production of polyester fibers and for the steps of after-treatment thereof. As a result, it has been found that the mobility of amorphous molecular chain of polyester cord (as the rubber-reinforcing material) is effected by the heat treatment in the dipping process (in step of treating with an adhesive) and that the main factor is temperature among various conditions in the heat treatment.

The chemical stability in rubber of yarns which are treated at 170 - 210 °C in the dipping process is compared with that of yarns which are treated at a temperature (230 - 240 °C) in the conventional dipping process. As a result, the latter shows a tenacity retention of only 35 %, but on the other hand, the former shows surprisingly that of 75 %. Nevertheless, when yarns are spun at a conventional spinning speed and the resulting undrawn polyester fibers having a high intrinsic viscosity are drawn at a high draw ratio and are treated at such a low temperature in dipping process, the high tenacity polyester fibers thus obtained have high thermal shrinkage and hence are not suitable as a rubber-reinforcing fiber. The temperature in the conventional dipping process for polyester fibers is usually in the range of 230 to 250 °C (actual temperature). This is owing to necessity of high temperature in order to exhibit excellent adhesion of a diffusion dipping agent such as Vulcabond E®. The dipping treatment gives also another important function, i.e. improvement of thermal dimensional stability of the fiber.

The present inventors have further intensively studied on the conditions for the production of polyester fibers without deterioration of the thermal dimensional stability, and have found that the most suitable material is a high tenacity fiber obtained by drawing a partially oriented polyethylene terephthalate yarn (hereinafter, referred to as "POY", which is occasionally called as a highly oriented, amorphous fiber) which has a high intrinsic viscosity. It is confirmed that when a high tenacity polyester fiber obtained from POY is subjected to dipping at 170 - 210 °C the fiber shows unexpectedly improved chemical stability in rubber while keeping the excellent thermal dimensional stability.

An object of the present invention is to provide an improved method for the production of a rubber-reinforcing polyester cord having improved chemical stability. Another object of the invention is to provide a rubber-reinforcing polyester cord having improved chemical stability without deteriorating the excellent thermal dimensional stability which is particularly useful as a reinforcing material for tires, belts, etc., particularly as a carcass material of light truck tires. These and other objects and advantages of the present invention will be apparent to persons skilled in the art from the following description.

Detailed Description of Invention

The process of the production of a rubber-reinforcing polyester cord of the present invention comprises melt-spinning a polyester comprising predominantly polyethylene terephthalate and having an intrinsic viscosity of not less than 0.75 measured in phenol/tetrachloroethane = 6/4 at 30 °C, taking up the resulting spun yarns under cooling to obtain solid yarns, wherein filaments have a birefringence of 0.010 to 0.050, and drawing the solid yarns at a draw ratio of 2.0 to 4.0 times, characterized in a) twisting the drawn yarns at a rate of 5 times or more per 10 cm to obtain a cord, B) applying thereto in a per se known manner an adhesive for a rubber, and C) then heat-treating at a temperature of 170 to 210 °C.

In order to obtain the desired cord having excellent toughness as well as improved chemical stability, the solid yarns obtained by taking up of the spun yarns are composed of filaments having preferably a lower birefringence such as 0.010 to 0.020. That is, in the preferred embodiment of the invention, the filaments have a birefringence of 0.010 to 0.020, and the solid yarns are drawn at a draw ratio of 2.9 to 4.0 times.

The polyester fiber used in the present invention is used for reinforcing rubbers, and hence, in order to obtain excellent fatigue resistance and high tenacity, the starting polyester comprises predominantly

polyethylene terephthalate (i.e. at least 95 mole % of ethylene terephthalate units).

The polyester is extruded through a spinneret at a molten state, and then, the spun yarns are taken up under cooling to obtain solid yarns, wherein the filaments have a birefringence of 0.010 to 0.050. For this purpose, the spun yarns are taken up at a take-up speed where the filament stress at a solidification point is in the range of 1,5 MPa (1.5 x $10^7$ dyne/$cm^2$) to 7,5 MPa (7.5 x $10^7$ dyne/$cm^2$), preferably 2,0 MPa (2.0 x $10^7$ dyne/$cm^2$) to 5,0 MPa (5.0 x $10^7$ dyne/$cm^2$). In this step, the spun yarns are preferably cooled with a cooling air having a comparatively high temperature (e.g. 50 to 60 °C).

The solid yarns thus obtained are drawn at a draw ratio of 2,0 to 4.0, by which the yarns have a tenacity of not less than 6,8 cN/dtex (7.5 g/d). The solid yarns are subjected to the drawing after wound up or without winding up. The polyester yarns thus obtained have a high tenacity and excellent thermal dimensional stability. The yarns may optionally be treated with an epoxy compound containing two or more epoxy groups or an isocyanate compound in order to give them surface activity, during the spinning and drawing steps or after the drawing step, by which the yarns show improved adhesion to rubbers.

In order to obtain a polyester cord having more excellent toughness, the taking up of the spun yarns under cooling is carried out so that the solid filaments have a birefringence of 0.010 to 0.020, and the solid yarns are drawn at a draw ratio of 2. 9 to 4.0 in the same manner as described above, by which the yarns have a tenacity of not less than 7,7 cN/dtex (8.5 g/d).

The polyester spun yarns are twisted at a rate of 5 turns or more per 10 cm to obtain a cord in order to make easy to handle in the subsequent steps and also to improve the fatigue resistance, in which state it is used as a rubber-reinforcing material. The twist rate may vary according to the desired utilities.

The cord thus obtained is subjected to a dipping treatment in order to give it adhesion to rubbers. The dipping treatment is carried out by dipping the cord in a dipping solution in one or more steps. The dipping solution includes (A) an aqueous dispersion of an epoxy resin, (B) an aqueous dispersion of a block isocyanate, (C) an aqueous solution of a carrier for the polyester fibers, and (D) a mixture of a resorcinol formaldehyde resin and a rubber latex. These may be used alone or in combination of two or more thereof.

In order to give the cord higher adhesion to rubbers, the dipping solution contains preferably at least partially the aqueous dispersion of an epoxy resin (A).

The epoxy resin of the liquid (A) includes reaction products of an aliphatic polyhydric alcohol (e.g. glycerin, propylene glycol, ethylene glycol, hexane triol, sorbitol, trimethylolpropane, 3-methylpentanetriol, polyethylene glycol, polypropylene glycol, etc.) and a halohydrin (e.g. epichlorohydrin, etc.); reaction products of an aromatic polyhydric alcohol (e.g. resorcinol, catechol, hydroquinone, 1,3,5-trihydroxybenzene, bis(4-hydroxyphenyl)methane, bis(4-hydroxyphenyl)dimethylmethane, 4,4'-bi-hydroxyphenyl, etc.) and a halohydrin (e.g. epichlorohydrin, etc.); reaction products of a phenolic novolak resin (e.g. phenolic novolak resin, cresolic novolak resin, resorcinolic novolak resin, etc.) and a halohydrin (e.g. epichlorohydrin, etc.); epoxy compounds which unsaturated bonds are oxidized by a peracetic acid (e.g. diglycidyl ether, vinylcyclohexene diepoxide, 3,4-epoxy-6-methylcyclohexylmethyl-3',4'-epoxy-6'-methylcyclohexenecarboxylate, etc.); etc.

The blocked isocyanate compound for the liquid (B) includes reaction products obtained by reacting one or more of polyisocyanate compounds and one or more of isocyanate blocking agents. The polyisocyante compounds include diisocyanates, such as tolylene diisocyanate, bitolylene diisocyanate, dianisidine diisocyanate, tetramethylene diisocyanate, hexamethylene diisocyanate, m-phenylene diisocyanate, m-xylylene diisocyanate, alkylbenzene diisocyanates, 1-chlorobenzene-2,4-diisocyanate, cyclohexylmethane diisocyanate, 3,3'-dimethoxydiphenylmethane-4,4'-diisocyanate, 1-nitrobenzene-2,4-diisocyante, 1-alkoxybenzene-2,4-diisocyanates, ethylene diisocyanate, propylene diisocyante, cyclohexylene-1,2-diisocyante, 3,3'-dichloro-4,4'-biphenylenediisocyanate, diphenylene diisocyanate, 2-chlorotrimethylene diisocyanate, butylene-1,2-diisocyanate, ethylidene diisocyanate, diphenylmethane-4,4'-diisocyanate, diphenylethane diisocyanate, 1,5-naphthalene diisocyanate, cyclohexane diisocyanate, isophorone diisocyanate, etc.; triisocyantes, such as triphenylmethane triisocyanate, diphenylmethane triisocyanate, butane-1,2,2-triisocyanate, trimethylolpropanetolylene diisocyanate trimer, 2,4,4'-diphenyl ether triisocyanate, etc.; polyfunctional isocyanates, such as polymethylenepolyphenyl isocyanates which are a mixture of compounds of the formula:

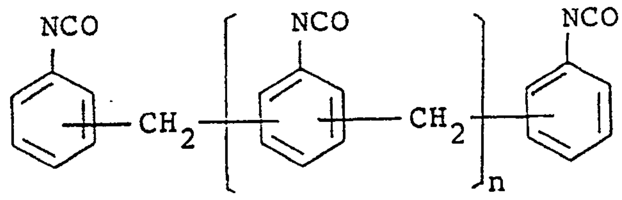

wherein n is an integer of 0, 1, 2, 3, and 4.

The isocyanate blocking agents include phenols (e.g. phenol, thiophenol, cresol, resorcinol), tertiary alcohols (e.g. t-butanol, t-pentanol, t-butanethiol, etc.), aromatic amines (e.g. diphenylamine, diphenylnaphthylamine, xylidine, etc.), imines (e.g. ethyleneimine, propyleneimine, etc.), imides (e.g. succinic imide, phthalic imide, etc.), active methylene compounds (e.g. acetacetic esters, acetylacetone, malonic diesters, etc.), mercaptanes (e.g. 2-mercaptobenzothiazole, t-dodecylmercaptane, etc.), lactames (e.g. ε-caprolactame, δ-valerolactame, γ-butyrolactame, β-propiolactame, etc.), ureas (e.g. urea, diethyleneurea, thiourea, etc.), oximes (e.g. acetoxime, cyclohexanone oxime, benzophenone oxime, methyl ethyl ketone oxime, etc.), diaryl compounds (e.g. carbazole, phenolnaphthylamine, N-phenylxylidine, etc.), bisulfites, borates, α-pyrrolidone, and the like. These are used alone or in combination of two or more thereof.

Suitable examples of the carriers for the liquid (C) are benzoic acid and derivatives thereof (e.g. benzoic acid, methyl benzoate, propyl benzoate, m-nitrobenzoic acid, etc.), salicylic acid and derivatives thereof (e.g. salicylic acid, methyl salicylate, phenyl p-bromosalicylate, etc.), phthalic acid and derivatives thereof (e.g. phthalic acid, ethyl phthalate, etc.), phenol derivatives (e.g. acetophenone, propiophenone, p-chlorophenol, p-nitrophenol, o-phenylphenol, 2,4,6-tribromophenol, m-cresole, resorcinol, etc.), aromatic ethers (e.g. anisole, p-bromoanisole, etc.), halogenobenzenes (e.g. monochlorobenzene, p-dichlorobenzene, 1,3,5-trichlorobenzene, p-dibromobenzene, etc.), naphthalene derivatives (e.g. methylnaphthalene, α-bromonaphthalene, etc.), di- and triphenylmethane derivatives (e.g. diphenyl-dichloromethane, triphenolchloromethane, triphenylcarbinol, etc.), diphenyl derivatives (e.g. 4,4'-dihydroxydiphenyl, 4,4'-diaminodiphenyl, etc.), tricresyl phosphate, allyl 3-hydroxyphenyl ether and a polymer thereof, reaction products of resorcinol, p-chlorophenol and formaldehyde of the formula:

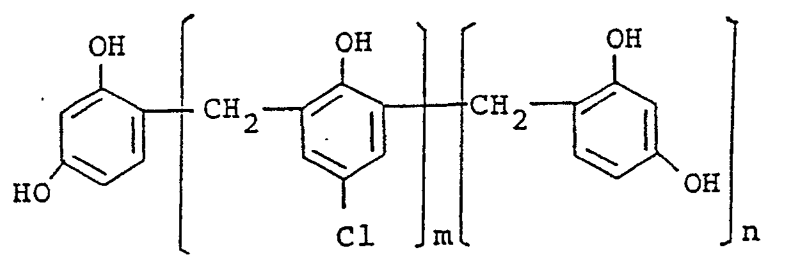

wherein m and n are 0 or a positive integer, and m is 1 in average, and n is 1 in average, and resorcinol derivatives of the formula:

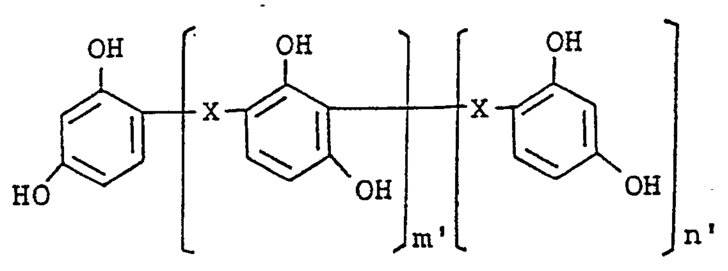

wherein m' and n' are 0 or a positive integer, and X is $-CH_2-$, -O-, or $-S_\ell-$, group, where $\ell$ is 1 or 2.

These carriers diffuse within the polyester fibers at a high temperature to exhibit the adhesion or adhesion-aiding effects, and hence, they are also called as a diffusible adhesive.

The liquid (D) is usually called as "RFL" and is an aqueous mixture of a precondensate obtained by reaction of resorcinol and formalin in the presence of an acidic or alkaline catalyst and one or more latexes

selected from styrene-butadiene copolymer latex, carboxyl group-containing styrene-butadiene copolymer latex, styrene-butadiene-vinylpyridine terpolymer latex, acrylonitrile-butadiene copolymer latex, polychloroprene latex, polybutadiene latex, natural rubber latex, and the like.

In the present invention, it is the most important to regulate the heat treatment temperature in the dipping process.

The present inventors have found that in case of using a polyester fiber comprising predominantly polyethylene terephthalate as the rubber composite, the mobility of the amorphous molecular chain and futher the chemical stability in rubber are mainly affected by the temperature in the adhesive-treating (i.e. dipping) process. The temperature in the heat-treatment should be in the range of 170° C to 210° C. This importance of the heat-treating temperature is explained in more detail referring to the accompanying Fig. 1.

Fig. 1 shows the relation between the heat-treating temperature and the retained strength, wherein the polyester cords were subjected to the dipping treatment at a temperature as shown in the figure and then were embedded in rubber, heated at 170° C for 3 hours, and the retained strength of the cords after heat treatment in rubber was measured at room temperature. The retained strength is plotted at each heat-treating temperature in Fig. 1. As is clear from the figure, the heat-treating temperature gives much effect on the chemical stability or the polyester in rubber. According to the knowledge of the present inventors, the deterioration of polyesters in rubber is largely affected by the compositions of rubber, particularly by the kinds and amounts of amines contained in the rubber, and in case or the conventional rubber compositions, the conventional polyester cords show usually a retained strength of 20 to 40 % when the rubber composite is heated at 170° C for 3 hours. In this viewpoint, the polyester cord of the present invention shows surprisingly higher retained strength.

Besides, as is mentioned above, when the high tenacity yarns made from undrawn yarns having a birefringence of 0.010 to 0.020 (i.e. medium oriented yarns) are used, the polyester cord has more improved toughness as well as excellent chemical stability with keeping the thermal shrinkage at the usual level.

Thus, the rubber-reinforcing polyester cord of the present invention has excellent chemical stability, excellent tenacity and further excellent toughness with keeping the thermal dimensional stability and thermal shrinkage, and is useful as a tire cord for various automobiles, particularly for large size tires such as light truck tires.

The present invention is illustrated by the following Examples, but should not be construed to be limited thereto.

<u>Example 1</u>

Polyethylene terephthalate (intrinsic viscosity: 1.0, diethylene glycol content: 1.0 % by mole, carboxyl group content: 10 equivalents/$10^6$ g) is melt-spun and drawn under the four conditions, A, B, C and D as shown in Table 1. As is clear from the average birefringence of the spun yarns, in case of A, B and C, POY (highly oriented, amorphous yarns) are spun and drawn, and in case of D, conventional undrawn yarns (almost non-oriented amorphous yarns) are drawn, which is out of the claim in the present invention.

The drawn yarns thus obtained 1100 dtex [1000 D (denier)] are each twisted at a rate of 49 x 49 (per 10 cm) to give two folded yarn cords. The cords are each treated with RFL liquid which contains a reaction product of resorcinol, p-chlorophenol and formaldehyde (Vulcabond® E,). The compositions of the dipping solution are shown in Table 2, and the treating conditions are shown in Table 3. The heat-treating temperature is varied stepwise in each cord. The properties of the cords, yarn characteristics after recovered from twisting, and deterioration test in rubber are shown in Table 3.

Table 1

| | A | B | C | D |
|---|---|---|---|---|
| Polymer temperature (°C) | 320 | 320 | 305 | 310 |
| Through-put per each hole (g/min.) | 1.89 | 1.33 | 1.82 | 2.32 |
| Number of nozzle hole | 380 | 500 | 380 | 190 |
| Distance between nozzel and quench (cm) | 30 | 30 | 28 | 30 |
| Temperature of quenching air (°C) | 50 | 60 | 20 | 20 |
| Velocity of quenching air (cm/sec.) | 50 | 40 | 40 | 40 |
| Spinning speed (m/min.) | 2500 | 2000 | 2500 | 700 |
| Stress at solidification point MPa ($dyne/cm^2$) | 3,45($3.45x10^7$) | 2,52($2.52x10^7$) | 3,26($3.26x10^7$) | 0,13($1.3x10^6$) |
| Average birefringence of spun yarns | 0.035 | 0.025 | 0.033 | 0.002 |
| Drawing temperature at first stage (°C) | 80 | 83 | 82 | 95 |
| Drawing ratio at first stage (times) | 1.72 | 1.90 | 1.73 | 3.96 |
| Drawing temperature at second stage (°C) | 160 | 160 | 160 | 160 |
| Drawing ratio at second stage (times) | 1.30 | 1.30 | 1.3 | 1.25 |

- to be continued -

Table 1 (Continued)

| | A | B | C | D |
|---|---|---|---|---|
| Drawing temperature at third stage (°C) | 240 | 230 | 210 | 220 |
| Drawing ratio at third stage (times) | 1.15 | 1.20 | 1.1 | 1.15 |
| Yarn denier dtex (d) | 1103(1003) | 1105(1005) | 1099(999) | 1099(999) |
| Yarn tensile strength (kg) | 8.6 | 8.9 | 8.1 | 9.0 |
| Yarn tenacity cNg/dtex (g/d) | 7,8(8.6) | 8,1(8.9) | 7,4(8.1) | 8,2(9.0) |
| Elongation at a load of 4,1 cN /dtex (4.5 g/d) (%) | 5.0 | 5.2 | 5.1 | 5.2 |
| Elongation at break of yarn (%) | 11.5 | 12.1 | 11.0 | 13.2 |
| Intrinsic viscosity of yarn | 0.88 | 0.88 | 0.90 | 0.88 |

Table 2

| | | | |
|---|---|---|---|
| RF resin solution | | | |
| Water | 332.4 | parts by weight | |
| Sodium hydroxide | 1.3 | " | |
| Resorcinol | 16.6 | " | |
| Formaldehyde (37 %) | 14.7 | " | |
| Totally | 365.0 | | Pre-maturing at 25°C for 6 hrs. |
| RFL | | | |
| RF resin | 365.0 | parts by weight | |
| VP latex (41 %) | 195.0 | " | |
| SBR latex (40 %) | 50.0 | " | |
| Totally | 610.0 | | |
| Vulcabond® E + RFL | | | |
| RFL | 610.0 | parts by weight | |
| Vulcabond® E | 183.0 | " | |
| Totally | 793.0 | | Maturing for 24 hrs. |

Table 3

| Treated cords number | 1 | 2* | 3* | 4* | 5 | 6* | 7* | 8* | 9* | 10* | 11* | 12* |
|---|---|---|---|---|---|---|---|---|---|---|---|---|
| Yarns as in Table 1 | A | A | A | A | B | B | C | C | D | D | D | D |
| Properties of raw cords | | | | | | | | | | | | |
| Tensile strength (Kg) | 15.4 | " | " | " | 15.6 | " | 14.8 | " | 15.8 | " | " | " |
| Elongation at a load of 4.5 kg (%) | 6.6 | " | " | " | 6.4 | " | 6.5 | " | 6.8 | " | " | " |
| Elongation at break (%) | 17.6 | " | " | " | 17.4 | " | 16.4 | " | 17.5 | " | " | " |
| Heat shrinkage at 150°C (%) | 9.3 | " | " | " | 8.7 | " | 9.0 | " | 10.9 | " | " | " |
| Dipping conditions | | | | | | | | | | | | |
| Drying temp. (°C) | 150 | 150 | 150 | - | 150 | 150 | 150 | 150 | 150 | 150 | 150 | - |
| Drying time (sec) | 60 | 60 | 60 | - | 60 | 60 | 60 | 60 | 60 | 60 | 60 | - |
| Heat-treat. temp. (°C) | 200 | 220 | 240 | - | 210 | 220 | 220 | 240 | 200 | 220 | 240 | - |
| Heat-treat. time (sec) | 120 | 120 | 120 | - | 120 | 120 | 120 | 120 | 120 | 120 | 120 | - |
| Stretching ratio (%) | 3.0 | 3.0 | 3.0 | - | 3.0 | 3.0 | 3.0 | 3.0 | 3.0 | 3.0 | 3.0 | - |

- to be continued -

Table 3 (Continued)

| Treated cords number | 1 | 2* | 3* | 4* | 5 | 6* | 7* | 8* | 9* | 10* | 11* | 12* |
|---|---|---|---|---|---|---|---|---|---|---|---|---|
| Yarns as in Table 1 | A | A | A | A | B | B | C | C | D | D | D | D |
| Properties of dipped cords | | | | | | | | | | | | |
| Tensile strength (kg) | 14.9 | 14.7 | 14.0 | - | 15.0 | 14.2 | 14.2 | 13.5 | 15.4 | 15.2 | 14.9 | - |
| Elongation at a load of 4.5 kg (%) | 4.3 | 4.2 | 4.3 | - | 4.1 | 4.0 | 4.2 | 4.2 | 4.2 | 4.3 | 4.3 | - |
| Elongation at break (%) | 15.6 | 14.9 | 13.5 | - | 13.9 | 13.0 | 13.5 | 12.6 | 16.2 | 16.1 | 15.5 | - |
| Heat shrinkage at 150°C (%) | 6.2 | 5.2 | 4.4 | - | 5.5 | 4.6 | 5.2 | 4.5 | 10.2 | 8.0 | 6.1 | - |
| H adhesion (kg/cm) | 9.8 | 11.2 | 12.5 | - | 9.4 | 10.9 | 11.1 | 12.1 | 8.9 | 11.5 | 12.3 | - |
| Properties of untwisted yarns | | | | | | | | | | | | |
| Tensile strength (kg) | 7.8 | 7.5 | 7.3 | 8.3 | 7.9 | 7.7 | 7.3 | 6.1 | 8.0 | 7.9 | 7.6 | 8.5 |
| Elongation at a load of 4.5 kg (%) | 5.4 | 5.4 | 5.7 | 5.3 | 5.3 | 5.2 | 5.3 | 5.4 | 5.3 | 5.5 | 5.7 | 5.2 |
| Elongation at break (%) | 9.2 | 8.9 | 8.5 | 9.8 | 9.0 | 8.5 | 8.5 | 7.9 | 10.1 | 9.8 | 9.4 | 11.8 |

- to be continued -

Table 3 (Continued)

| Treated cords no. | 1 | 2 | 3* | 4* | 5 | 6* | 7* | 8* | 9* | 10* | 11* | 12* |
|---|---|---|---|---|---|---|---|---|---|---|---|---|
| Yarns | A | A | A | A | B | B | C | C | D | D | D | D |
| Properties of untwisted yarn | | | | | | | | | | | | |
| Heat shrinkage at 150°C (%) | 4.4 | 3.8 | 3.3 | 8.9 | 4.5 | 4.1 | 4.0 | 3.4 | 6.1 | 5.3 | 4.3 | 10.3 |
| Density ($g/cm^3$) | 1.390 | 1.394 | 1.403 | 1.387 | 1.391 | 1.393 | 1.395 | 1.405 | 1.389 | 1.395 | 1.405 | 1.385 |
| Tα** (°C) | 150 | 148 | 145 | 150 | 151 | 150 | 149 | 145 | 160 | 158 | 154 | 160 |
| Strength retention after deterioration in rubber at 170°C | | | | | | | | | | | | |
| After 1 hr. (%) | 95 | 91 | 87 | 95 | 95 | 93 | 89 | 75 | 95 | 93 | 88 | 94 |
| After 3 hrs. (%) | 79 | 71 | 35 | 78 | 78 | 70 | 56 | 25 | 80 | 69 | 37 | 80 |

*) These are reference examples.

**) Tα means an absorption peak temperature of amorphous region in the temperature distribution of dynamic loss tangent (tanδ) which was measured at 110 Hz.

( 1 kg force ≒ 9.8 N )

The absorption peak temperature at amorphous region (Tα) appeared in the temperature distribution of tan δ is used as a parameter which is correlative to the mobility of molecular chain in amorphous region.

The accompanying Fig. 2 shows the relation between Tα and heat-treating temperature of yarn A and yarn D. Both yarns are different in the fine structure owing to the difference of the process for the production thereof, and hence, the difference of mobility of the amorphous molecular chain can not directly be evaluated merely by the Tα. However, at least as to the same sample, Tα can be used as a measure for evaluation of effect of heat-treatment on the molibity of amorphous molecular chain. It is clear from Fig. 2 that when the heat-treating temperature is above 210°C, Tα lowers rapidly, and hence, the mobility of

amorphous molecular chain is well correlative to chemical stability of polyester in rubber. The increase of the mobility of amorphous molecular chain by the heat-treatment will be explained as follows. The heat treatment causes the perfection of crystalline (i.e. perfection of crystalline structure and increase of crystalline size) and thereby incomplete structure being accumulated within the amorphous region.

As is clear from Table 3, in both of the polyester fiber obtained by drawing of POY A, B or C and the polyester fiber obtained by drawing of the almost non-oriented undrawn yarn D, the mobility of the amorphous molecular chain is increased and the chemical stability in rubber is significantly lowered, when the dipping temperature is above 210°C.

Besides, the yarn A and yarn B are prepared by the method by the present inventors wherein the molten filaments are cooled with a hot quenching air so that the difference of molecular orientation at the inner and outer layer of each filament is decreased (cf. Japanese Patent First Publication No. 98419/1983). These yarn A and yarn B show more improved properties when subjected to the dipping at a low temperature in comparison with the yarn C which is not quenched under such conditions as above.

Moreover, in case of yarn D which is obtained by drawing of almost non-oriented amorphous undrawn yarn, when it is subjected to the dipping at a heat-treating temperature of not higher than 210°C like in the other yarns, it shows improved chemical stability, but shows simultaneously high heat shrinkage, and hence, when it is incorporated into the rubber composite, the cord shrinks to induce shrinkage of the rubber composite. Accordingly, such a cord is not suitable for rubber-reinforcing material.

## Example 2

The same yarn A and yarn D as used in Example 1 are twisted at a rate of 49 x 49 per 10 cm to obtain two folded yarn cord in the same manner as described in Example 1. The yarn is subjected to dipping treatment under the conditions as shown in Table 4, wherein the first dipping solution (in the first zone) is an aqueous dispersion of a 2 % by weight of an epoxy resin (Denacol® EX 313, which is a reaction product of glycerin and epichlorohydrin) which is incorporated with 0.2 % by weight of sodium dodecylsulfosuccinate, and the second dripping solution (in the second zone) is a RFL solution which is prepared by adding resorcinol (5.7 parts by weight), 37 % aqueous formalin (6.3 parts by weight) and 10 % aqueous sodium hydroxide (3 parts by weight) to water (185.7 parts by weight), maturing the mixture at 25°C for 6 hours, and adding thereto Nipol 2518 FS® (which is a butadiene-styrene-vinylpyridine terpolymer latex, solid content: 41 %) (175.7 parts by weight) and water (23.6 parts by weight). The properties of the dipped cords, properties of the yarns after untwisting, and the strength retention after deterioration in rubber at 170°C are shown in Table 4.

Table 4

| Treated cords number | 13* | 14* | 15* | 16* | 17* | 18* |
|---|---|---|---|---|---|---|
| Yarns as in Table 1 | A | A | A | D | D | D |
| Dipping conditions | | | | | | |
| Drying temp. (°C) in 1st zone | 130 | 130 | 130 | 130 | 130 | 130 |
| Drying time (sec) in 1st zone | 50 | 50 | 50 | 50 | 50 | 50 |
| Heat-treat. temp. (°C) in 1st zone | 220 | 220 | 220 | 240 | 240 | 240 |
| Heat-treat. time (sec) in 1st zone | 50 | 50 | 50 | 50 | 50 | 50 |
| Stretching ratio (%) in 1st zone | 6.0 | 3.0 | 0 | 6.0 | 3.0 | 0 |
| Drying temp. (°C) in 2nd zone | 130 | 130 | 130 | 130 | 130 | 130 |
| Drying time (sec) in 2nd zone | 50 | 50 | 50 | 50 | 50 | 50 |
| Heat-treat. temp. (°C) in 2nd zone | 220 | 220 | 220 | 240 | 240 | 240 |
| Heat-treat. time (sec) in 2nd zone | 50 | 50 | 50 | 50 | 50 | 50 |
| Stretching ratio (%) in 2nd zone | 0 | 0 | 0 | 0 | 0 | 0 |

- to be continued -

Table 4 (Continued)

| Treated cords number | 13* | 14* | 15* | 16* | 17* | 18* |
|---|---|---|---|---|---|---|
| Yarns as in Table 1 | A | A | A | D | D | D |
| Properties of dipped cords | | | | | | |
| Tensile strength (kg) | 14.5 | 14.4 | 14.2 | 14.4 | 14.3 | 14.0 |
| Elongation at a load of 4.5 kg (%) | 4.0 | 4.5 | 5.4 | 4.1 | 4.6 | 5.6 |
| Elongation at break (%) | 14.2 | 14.4 | 16.1 | 13.8 | 13.9 | 15.1 |
| Heat shrinkage at 150°C (%) | 5.3 | 4.8 | 3.8 | 6.2 | 5.7 | 4.8 |
| H-adhesion (kg/cm) | 12.3 | 12.5 | 12.6 | 12.3 | 12.4 | 12.0 |
| Properties of untwisted yarns | | | | | | |
| Tensile strength (kg) | 7.8 | 7.7 | 7.5 | 7.7 | 7.6 | 7.6 |
| Elongation at a load of 4.5 kg (%) | 4.8 | 5.5 | 6.8 | 4.9 | 5.7 | 6.9 |
| Elongation at break (%) | 8.7 | 8.8 | 9.9 | 9.0 | 9.2 | 10.0 |
| Heat shrinkage at 150°C (%) | 4.3 | 3.8 | 3.3 | 5.0 | 4.4 | 3.7 |
| Density ($g/cm^3$) | 1.391 | 1.393 | 1.392 | 1.406 | 1.407 | 1.405 |
| $T_\alpha$ (°C) | 148 | 148 | 148 | 155 | 155 | 154 |

- to be continued -

Table 4 (Continued)

| Treated cords number | 13* | 14* | 15* | 16* | 17* | 18* |
|---|---|---|---|---|---|---|
| Yarns as in Table 1 | A | A | A | D | D | D |
| Strength retention after deterioration in rubber at 170°C | | | | | | |
| After 1 hr. (%) | 92 | 90 | 86 | 88 | 87 | 85 |
| After 3 hrs. (%) | 71 | 70 | 65 | 36 | 36 | 34 |

*) Reference examples

(1 kg force = 9.8 N)

As is clear from Table 4, the polyester cord of examples 13 to 15 (shows remarkedly improved chemical stability in rubber in comparison with examples 16 to 18 while keeping the improved relation between the heat shrinkage and modulus. By the way, generally speaking, when the stretching rate in the dipping step is higher, the chemical stability in rubber is higher. However, in the above examples, no significant effect is obtained in the stretching rate. As to the heat-treatment, no significant effect is obtained

either. These results mean that among the three conditions in the dipping process: temperature, time and tension, only the heat-treating temperature in the dipping process rules mainly the mobility of amorphous molecular chain and the chemical stability in rubber.

Example 3

Polyethylene terephthalate (intrinsic viscosity: 1.0, diethylene glycol content: 1.0 % by mole, carboxyl group content: 10 equivalents/$10^6$ g) is melt-spun and drawn under the four conditions, A, B, C and D as shown in Table 5. As is clear from the average birefringence of the spun yarns, in case of A and B, MOY (medium oriented, amorphous yarns) are spun and drawn, in case of C, POY (highly oriented, amorphous yarns) are used, and in case of D, conventional undrawn yarns are used. D is a reference example.

The drawn yarns thus obtained 1100 dtex (1000 D) are each twisted at a rate of 49 x 49 (per 10 cm) to give two folded yarn cords. The cords are each treated with RFL solution which contains a reaction product of resorcinol, p-chlorophenol and formaldehyde (Vulcabond®E). The compositions of the treating liquid are shown in Table 6, and the treating conditions are shown in Table 7. The heat-treating temperature is varied stepwise in each cord. The properties of the cords, yarn characteristics after untwisting, and deterioration test in rubber are shown in Table 7.

Table 5

| | A | B | C | D |
|---|---|---|---|---|
| Polymer temperature (°C) | 310 | 320 | 320 | 310 |
| Through-put per each hole (g/min.) | 2.14 | 2.31 | 1.89 | 2.32 |
| Number of nozzle holes | 240 | 240 | 380 | 190 |
| Distance between nozzel and quench (cm) | 13 | 13 | 30 | 30 |
| Temperature of quenching air (°C) | 50 | 50 | 50 | 20 |
| Velocity of quenching air (cm/sec.) | 50 | 50 | 50 | 40 |
| Spinning speed (m/min.) | 1250 | 1550 | 2500 | 700 |
| Average birefringence of spun yarns | 0.013 | 0.018 | 0.035 | 0.002 |
| Drawing temperature at first stage (°C) | 85 | 85 | 80 | 95 |
| Drawing ratio at first stage (times) | 2.47 | 2.15 | 1.72 | 3.96 |
| Drawing temperature at second stage (°C) | 160 | 160 | 160 | 160 |
| Drawing ratio at second stage (times) | 1.30 | 1.30 | 1.3 | 1.25 |

- to be continued -

Table 5 (Continued)

| | A | B | C | D |
|---|---|---|---|---|
| Drawing temperature at third stage (°C) | 240 | 240 | 240 | 220 |
| Drawing ratio at third stage (times) | 1.15 | 1.15 | 1.15 | 1.15 |
| Average birefringence of drawn yarn | 0.195 | 0.196 | 0.193 | 0.193 |
| Yarn denier dtex (d) | 1103(1003) | 1101(1001) | 1103(1003) | 1099(999) |
| Tensile strength (kg) | 9.2 | 9.1 | 8.6 | 9.0 |
| Tenacity cN/dtex (g/d) | 8,4(9.2) | 8,3(9.1) | 7,8(8.6) | 8,2(9.0) |
| Elongation at a load of 4,1 cN/dtex (4.5 g/d) (%) | 5.1 | 5.0 | 5.0 | 5.2 |
| Elongation at break of yarn (%) | 12.8 | 12.5 | 11.5 | 13.2 |
| Intrinsic viscosity of yarn | 0.89 | 0.88 | 0.88 | 0.88 |

Table 6

| | | | |
|---|---|---|---|
| RF resin solution | | | |
| Water | 332.4 | parts by weight | |
| Sodium hydroxide | 1.3 | " | |
| Resorcinol | 16.6 | " | |
| Formaldehyde (37 %) | 14.7 | " | |
| Totally | 365.0 | | Pre-maturing at 25°C for 6 hrs. |
| RFL | | | |
| RF resin | 365.0 | parts by weight | |
| VP latex (41 %) | 195.0 | " | |
| SBR latex (40 %) | 50.0 | " | |
| Totally | 610.0 | | |
| Vulcabond® E + RFL | | | |
| RFL | 610.0 | parts by weight | |
| Vulcabond® E | 183.0 | " | |
| Totally | 793.0 | | Maturing for 24 hrs. |

Table 7

| Treated cords number | 1 | 2* | 3* | 4* | 5 | 6* | 7* | 8* | 9* | 10* | 11* | 12* |
|---|---|---|---|---|---|---|---|---|---|---|---|---|
| Yarns as in Table 5 | A | A | A | A | B | B | C | C | D | D | D | D |
| Properties of raw cords | | | | | | | | | | | | |
| Tensile strength (kg) | 16.0 | " | " | " | 15.8 | " | 15.4 | " | 15.8 | " | " | " |
| Elongation at a load of 4.5 kg (%) | 6.7 | " | " | " | 6.5 | " | 6.6 | " | 6.8 | " | " | " |
| Elongation at break (%) | 18.2 | " | " | " | 17.9 | " | 17.6 | " | 17.5 | " | " | " |
| Heat shrinkage at 150°C (%) | 10.2 | " | " | " | 9.8 | " | 9.3 | " | 10.9 | " | " | " |
| Dipping conditions | | | | | | | | | | | | |
| Drying temp. (°C) | 150 | 150 | 150 | - | 150 | 150 | 150 | 150 | 150 | 150 | 150 | - |
| Drying time (sec) | 60 | 60 | 60 | - | 60 | 60 | 60 | 60 | 60 | 60 | 60 | - |
| Heat-treat. temp. (°C) | 200 | 220 | 240 | - | 210 | 220 | 220 | 240 | 200 | 220 | 240 | - |
| Heat-treat. time (sec) | 120 | 120 | 120 | - | 120 | 120 | 120 | 120 | 120 | 120 | 120 | - |
| Stretching ratio (%) | 3.0 | 3.0 | 3.0 | - | 3.0 | 3.0 | 3.0 | 3.0 | 3.0 | 3.0 | 3.0 | - |

- to be continued -

Table 7 (Continued)

| Treated cords number | 1 | 2* | 3* | 4* | 5 | 6* | 7* | 8* | 9* | 10* | 11* | 12* |
|---|---|---|---|---|---|---|---|---|---|---|---|---|
| Yarns as in Table 5 | A | A | A | A | B | B | C | C | D | D | D | D |
| Properties of dipped cords | | | | | | | | | | | | |
| Tensile strength (kg) | 15.8 | 15.6 | 14.8 | - | 15.6 | 15.4 | 14.8 | 14.0 | 15.6 | 15.1 | 14.9 | - |
| Elongation at a load of 4.5 kg (%) | 4.2 | 4.3 | 4.2 | - | 4.2 | 4.2 | 4.3 | 4.3 | 4.3 | 4.3 | 4.3 | - |
| Elongation at break (%) | 16.0 | 15.8 | 15.0 | - | 16.1 | 15.7 | 15.7 | 13.2 | 16.0 | 16.1 | 15.4 | - |
| Heat shrinkage at 150°C (%) | 6.8 | 6.0 | 4.9 | - | 6.5 | 5.8 | 6.2 | 4.4 | 10.3 | 8.1 | 6.0 | - |
| H-adhesion (kg/cm) | 9.5 | 11.8 | 12.7 | - | 10.9 | 11.6 | 8.9 | 12.6 | 8.7 | 11.8 | 12.6 | - |
| Strength retention after deterioration in rubber at 170°C | | | | | | | | | | | | |
| After 1 hr. (%) | 95 | 90 | 85 | 96 | 92 | 89 | 93 | 85 | 94 | 93 | 88 | 95 |
| After 3 hrs. (%) | 80 | 73 | 37 | 83 | 78 | 73 | 77 | 35 | 78 | 71 | 35 | 82 |

*) These are reference examples.

( 1 kg force = 9.8 N ).

As is clear from Table 7, in all of the polyester fiber obtained by drawing of MOY A or B, the polyester fiber obtained by drawing of POY C and the polyester fiber obtained by drawing of the almost non-oriented undrawn yarn D, the chemical stability in rubber is significantly lowered, when the dipping temperature is above 210°C.

Besides, as to the improvement of toughness, when the polyester fiber C obtained by drawing POY is heat-treated at 220°C, the treated cord (No. 7) shows similar toughness to that of the cord (No. 11) which was treated under conventional conditions, but the treated cords (Nos. 1 and 5) obtained by drawing the

MOY yarn A and yarn B show more improved toughness.

Moreover, in case of yarn D which is obtained by drawing of almost non-oriented amorphous undrawn yarn, when it is subjected to the dipping at a heat-treating temperature of not higher than 220° C like in the other yarns, it shows improved chemical stability, but shows simultaneously high heat shrinkage, and hence, when it is incorporated into the rubber composite, the cord shrinks to induce shrinkage of the rubber composite. Accordingly, such a cord is not suitable for a rubber-reinforcing material.

The cords obtained from the polyester MOY fiber (yarns A and B) show somewhat higher heat shrinkage than that of the cord obtained from polyester POY fiber (yarn C), but show significantly lower heat shrinkage than that of the conventional yarn (yarn D), and hence, are enough useful.

Example 4

The same yarn A and yarn D as used in Example 3 are twisted at a rate of 49 x 49 per 10 cm to obtain two folded yarn cord in the same manner as described in Example 3. The yarn is subjected to dipping treatment under the conditions as shown in Table 8, wherein the first dipping solution (in the first zone) is an aqueous dispersion of a 2 % by weight of an epoxy resin (Denacol® EX 313, which is a reaction product of glycerin and epichlorohydrin) which is incorporated with 0.2 % by weight of sodium dodecylsulfosuccinate, and the second dipping solution (in the second zone) is a RFL solution which is prepared by adding resorcinol (5.7 parts by weight), 37 % aqueous formalin (6.3 parts by weight) and 10 % aqueous sodium hydroxide (3 parts by weight) to water (185.7 parts by weight), maturing the mixture at 25° C for 6 hours, and adding thereto Nipol 2518 FS® (which is a butadiene-styrene-vinylpyridine terpolymer latex, solid content: 41 %) (175.7 parts by weight) and water (23.6 parts by weight). The characteristics of the dipped cords and the strength retention after deterioration in rubber at 170° C are shown in Table 8.

Table 8

| Treated cords number | 13* | 14* | 15* | 16* | 17* | 18* |
|---|---|---|---|---|---|---|
| Yarns as in Table 5 | A | A | A | D | D | D |
| Dipping conditions | | | | | | |
| Drying temp. (°C) in 1st zone | 130 | 130 | 130 | 130 | 130 | 130 |
| Drying time (sec) in 1st zone | 50 | 50 | 50 | 50 | 50 | 50 |
| Heat-treat. temp. (°C) in 1st zone | 220 | 220 | 220 | 240 | 240 | 240 |
| Heat-treat. time (sec) in 1st zone | 50 | 50 | 50 | 50 | 50 | 50 |
| Stretching raito (%) in 1st zone | 6.0 | 3.0 | 0 | 6.0 | 3.0 | 0 |
| Drying temp. (°C) in 2nd zone | 130 | 130 | 130 | 130 | 130 | 130 |
| Drying time (sec) in 2nd zone | 50 | 50 | 50 | 50 | 50 | 50 |
| Heat-treat. temp. (°C) in 2nd zone | 220 | 220 | 220 | 240 | 240 | 240 |
| Heat-treat. time (sec) in 2nd zone | 50 | 50 | 50 | 50 | 50 | 50 |
| Stretching raito (%) in 2nd zone | 0 | 0 | 0 | 0 | 0 | 0 |

- to be continued -

Table 8 (Continued)

| Treated cords number | 13 | 14 | 15 | 16* | 17* | 18* |
|---|---|---|---|---|---|---|
| Yarns as in Table 5 | A | A | A | D | D | D |
| Properties of dipped cords | | | | | | |
| Tensile strength (kg) | 15.8 | 15.5 | 15.4 | 14.4 | 14.3 | 14.0 |
| Elongation at a load of 4.5 kg (%) | 4.0 | 4.5 | 5.4 | 4.1 | 4.6 | 5.6 |
| Elongation at break (%) | 15.0 | 15.8 | 16.3 | 13.8 | 13.9 | 15.1 |
| Heat shrinkage at 150°C (%) | 6.4 | 5.9 | 4.8 | 6.2 | 5.7 | 4.8 |
| H-adhesion (kg/cm) | 12.5 | 12.4 | 12.8 | 12.3 | 12.4 | 12.0 |
| Strength retention after deterioration in rubber at 170°C | | | | | | |
| After 1 hr. (%) | 90 | 89 | 87 | 85 | 85 | 83 |
| After 3 hrs. (%) | 75 | 72 | 72 | 36 | 37 | 37 |

*) Reference examples

(1kg force = 9.8N)

As is clear from Table 8, the polyester cord of examples 13 to 15 shows remarkedly improved chemical stability in rubber in comparison with examples 16 to 18, while keeping the improved relation between the heat shrinkage and modulus. Moreover, the polyester cord of examples 13 to 15 shows improved toughness. Accordingly, it has satisfactory characteristics as a rubber-reinforcing polyester fiber.

By the way, generally speaking, when the stretching ratio in the dipping process is higher, the chemical stability in rubber is higher. However, in the above examples, no significant effect is obtained in the stretching ratio. As to the heat-treatment, no significant effect is obtained either. These results mean that among the three conditions in the dipping process: temperature, time and tension, only the heat-treating temperature in the dipping process rules mainly the mobility of amorphous molecular chain and the

chemical stability in rubber.

## Claims

1. A process for the production of a rubber-reinforcing polyester cord, which comprises melt-spinning a polyester comprising predominantly polyethylene terephthalate and having an intrinsic viscosity of not less than 0.75 (measured in phenol/tetrachloroethane = 6/4 at 30° C), taking up the resulting spun yarns under cooling to obtain solid yarns, wherein filaments have a birefringence of 0.010 to 0.050, and drawing the solid yarns at a draw ratio of 2.0 to 4.0 times, characterized in a) twisting the drawn yarns at a rate of 5 turns or more per 10 cm to obtain a cord, b) applying thereto in a per se known manner an adhesive for a rubber, and c) then heat-treating at a temperature of 170° C to 210° C.

2. The process according to claim 1, wherein the filaments have a birefringence of 0.010 to 0.020 and the solid yarns are drawn at a draw ratio of 2.9 to 4.0 times.

3. A rubber-reinforcing polyester cord which is produced by the process as set forth in claim 1.

4. A rubber product which is reinforced by the rubber-reinforcing polyester cord as set forth in claim 3.

5. The product according to claim 4, wherein the rubber product is a tire.

6. The product according to claim 5, wherein the rubber product is a light truck bias tire which is reinforced by using the polyester cord as set forth in claim 3 as a carcass material.

## Revendications

1. Procédé de production d'un câble en polyester pour renforcer du caoutchouc, qui comprend le filage en fusion d'un polyester comprenant principalement du poly(téréphtalate d'éthylèneglycol) et ayant une viscosité intrinsèque, mesurée dans un mélange phénol/tétrachloréthane 6/4 à 30° C, d'au moins 0,75, le renvidage des filés résultants sous refroidissement pour obtenir des fils solidifiés, dans lequel les filaments ont une biréfringence de 0,010 à 0,050, et l'étirage des fils solidifiés sous un rapport d'étirage de 2,0 à 4,0, caractérisé par a) le tordage des fils étirés à raison de 5 tours ou plus pour 10 cm pour obtenir un câble, b) l'application à celui-ci d'une manière connue en soi d'un adhésif pour caoutchouc, et c) un traitement thermique à une température de 170° C à 210° C.

2. Procédé selon la revendication 1, dans lequel les filaments ont une biréfringence de 0,010 à 0,020 et les fils solidifiés sont étirés sous un rapport d'étirage de 2,9 à 4,0.

3. Câble en polyester pour renforcer du caoutchouc, qui est produit par le procédé selon la revendication 1.

4. Produit à base de caoutchouc qui est renforcé par le câble en polyester pour renforcer du caoutchouc selon la revendication 3.

5. Produit selon la revendication 4, dans lequel le produit à base de caoutchouc est un pneumatique.

6. Produit selon la revendication 5, dans lequel le produit à base de caoutchouc est un pneumatique diagonal pour camion léger qui est renforcé en utilisant comme matériau pour la carcasse le câble en polyester selon la revendication 3.

## Patentansprüche

1. Verfahren zur Herstellung eines kautschukverstärkenden Polyester-Cords, umfassend das Schmelzspinnen eines vorwiegend Polyethylenterephthalat umfassenden Polyesters mit einer Grenzviskosität von nicht weniger als 0,75 (gemessen in Phenol/Tetrachlorethan = 6/4 bei 30 ° C), das Aufnehmen des resultierenden Spinngarns unter Kühlung zur Gewinnung fester Garnfäden, worin die Filamente eine Doppelbrechung von 0,010 bis 0,050 haben, und Verstrecken der festen Garnfäden mit einem Verstreckungsverhältnis vom 2,0- bis 4,0-fachen, gekennzeichnet durch

a) das Zwirnen der verstreckten Garnfäden mit einer Rate von 5 Drehungen oder mehr auf 10 cm, um eine Schnur zu erhalten,
b) das Aufbringen eines Klebstoffs für einen Kautschuk auf diese in an sich bekannter Weise und
c) danach die Wärmebehandlung bei einer Temperatur von 170 °C bis 210 °C.

2. Verfahren nach Anspruch 1, worin die Filamente eine Doppelbrechung von 0,010 bis 0,020 haben und die festen Garnfäden mit einem Verstreckungsverhältnis vom 2,9- bis 4,0-fachen verstreckt werden.

3. Kautschukverstärkender Polyester-Cord, hergestellt mittels des Verfahrens nach Anspruch 1.

4. Kautschuk-Erzeugnis, das durch den kautschukverstärkenden Polyester-Cord nach Anspruch 3 verstärkt ist.

5. Erzeugnis nach Anspruch 4, worin das Kautschuk-Erzeugnis ein Fahrzeugreifen ist.

6. Erzeugnis nach Anspruch 5, worin das Kautschuk-Erzeugnis ein Diagonalreifen für einen Leichttransport-Lastwagen ist, der mittels des Polyester-Cords nach Anspruch 3 als Karkassen-Material verstärkt ist.

Fig. 1

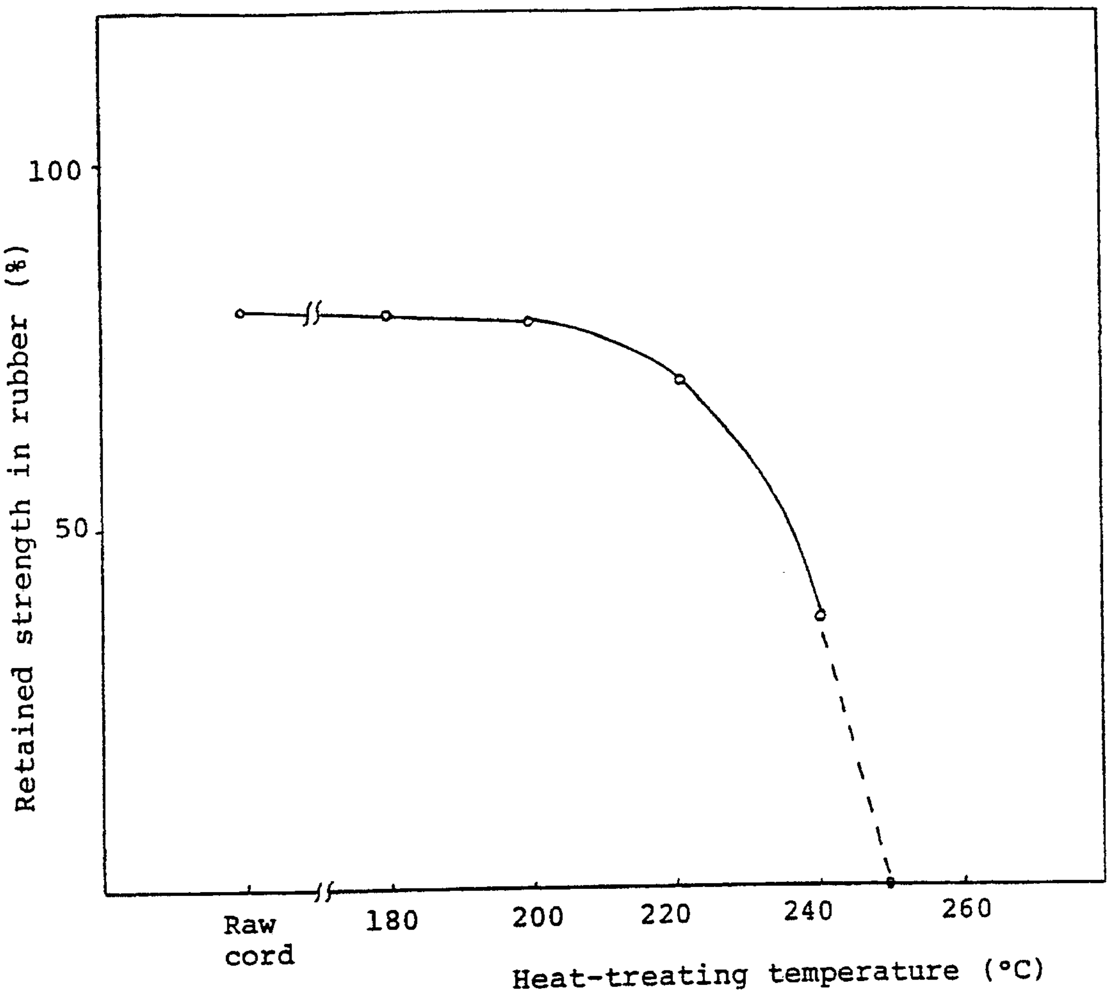
100
50
Retained strength in rubber (%)
Raw
cord
180
200
220
240
260
Heat-treating temperature (°C)

Fig. 2

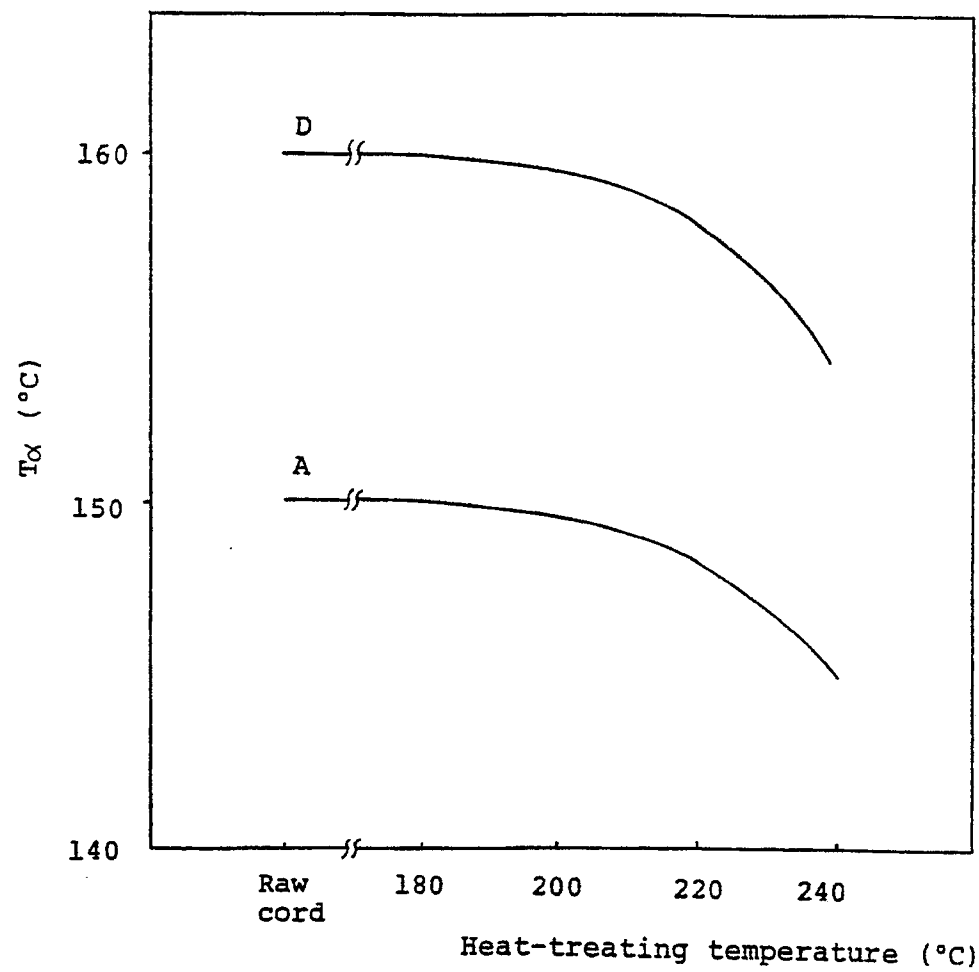
D
A
160
150
140
Tα (°C)
Raw cord
180
200
220
240
Heat-treating temperature (°C)